(19) Europäisches Patentamt
European Patent Office
Office européen des brevets

(11) Publication number: **0 168 207**
**A2**

(12) # EUROPEAN PATENT APPLICATION

(21) Application number: 85304703.3

(22) Date of filing: 02.07.85

(51) Int. Cl.[4]: C 08 L 57/02
C 08 K 3/20, C 08 K 5/00

(30) Priority: 03.07.84 US 627708
22.03.85 US 715147

(43) Date of publication of application:
15.01.86 Bulletin 86/3

(84) Designated Contracting States:
AT BE DE FR GB IT NL SE

(71) Applicant: HERCULES INCORPORATED
Hercules Plaza
Wilmington Delaware 19894(US)

(72) Inventor: Greiner, Richard William
30 Southridge East
Kennett Square Pennsylvania 19348(US)

(74) Representative: De Minvielle-Devaux, Ian Benedict Peter et al,
CARPMAELS & RANSFORD 43, Bloomsbury Square
London WC1A 2RA(GB)

(54) **Emulsifiable resin compositions.**

(57) Disclosed are resin compositions which are solids at room temperature (about 23°C), are storage stable, can be easily and readily handled, do not tend to freeze in storage during cold weather, and contain from about 2% to no greater than 13% water. The compositions consist essentially of, by weight, (1) from about 82% to about 95% of a resin or resin blend having a viscosity of greater than 100,000 centipoise at 60°C and a Ring and Ball softening point greater than 60°C, such as an ester of rosin, and an aliphatic hydrocarbon resin prepared by polymerizing monomer mixtures formed by cracking petroleum hydrocarbon mixtures; (2) from about 3% to about 5% of at least one anionic emulsifying agent; and (3) from 20 to 60 moles of water per mole of anionic emulsifying agent. These solid compositions can be easily and readily dispersed in an aqueous media to provide aqueous dispersions which are useful in the manufacture of water-borne adhesives.

EP 0 168 207 A2

This invention relates to solid resin compositions containing relatively small amounts of water which are easily and readily dispersed in aqueous media to provide aqueous dispersions. The resin compositions of this invention are useful in the manufacture of water-borne adhesives, particularly water-borne pressure sensitive adhesives.

European Patent Application, Serial No. 0085471, describes a blend suitable for providing an aqueous emulsion of a hydrocarbon resin comprising from 3 to 10 parts by weight of an emulsifier of the class of nonionic polyoxyethylene alkyl aryl ethers, anionic alkyl aryl sulfonates and mixtures thereof blended with a mixture of from 3 to 10 parts by weight of resinplast, such as naphthenic oil, and 80 to 94 parts by weight of said hydrocarbon resin with water through an inversion method comprising the sequential steps of admixing from 3 to 10 parts by weight of an emulsifier of the class consisting of nonionic polyoxyethylene alkyl aryl ethers, anionic alkyl aryl sulfonates and mixtures thereof with from 80 to 97 parts by weight of a molten hydrocarbon resin and from 0 to 10 parts by weight of a resinplast, heating said admixture above the softening point of the resin, emulsifier, resinplast mixture, slowly adding water heated to about 100°C to said heated admixture with vigorous stirring over a critical minimum period and until inversion occurs, adding sufficient additional water with agitation to provide an aqueous emulsion containing from 30 to 75 weight % water. There is no disclosure of any water being present in the blend of this European Patent Application, or any recognition of the need for water to be present or of the need to control the amount of water present.

The ratio of water to anionic emulsifying agent is critical to the preparation of the solid resin compositions

or emulsifiable concentrates of this invention. If no water or too little water is used, an emulsifiable concentrate will not be formed. If too much water is added, i.e., more than 60 moles of water to about 100 moles of water per mole of anionic emulsifying agent, unstable dispersions having large particles are formed. For example, when one uses 100 moles of water per mole of anionic emulsifying agent, you get a dispersion having a particle size of >2,000 microns. Such dispersions are unstable on storage and do not have properties useful in the preparation of pressure sensitive adhesives. Beyond 100 moles of water per mole of anionic emulsifying agent, you simply get a layer of resin and a layer of the water and anionic emulsifying agent.

The solid resin compositions or emulsifiable concentrates of this invention have improved stability, are easy to transport and store, and are not highly subject to freezing in cold climates at about 0°F to about -20°F or lower. Emulsifiable as used herein means capable of forming a stable dispersion.

This invention provides a solid resin composition containing a resin and at least one anionic emulsifying agent, characterized in that it contains from 20 to 60 moles of water per mole of anionic emulsifying agent. The solid resin composition of this invention is further characterized in that it contains, by weight, (1) from about 82% to about 95% of a resin or resin blend having a melt viscosity of greater than 100,000 centipoise at 60°C and a R&B softening point greater than 60°C, (2) from about 3% to about 5% of at least one anionic emulsifying agent, and (3) from 20 to 60 moles of water per mole of anionic emulsifying agent, the total of (1), (2) and (3) being 100%. Preferably the resin composition consist essentially of from about 85% to about 92% resin, from about 3% to about 5% of the anionic emulsifying agent, and 20 to 40 moles of water per mole of anionic emulsifying agent. Generally, the solid resin compositions will have a melt viscosity of greater than 100,000 cps to about 200,000 cps at 60°C and a R&B softening point greater

than 60°C to about 140°C. Preferably the resin will have a R&B softening point from about 80°C to about 120°C.

The compositions are prepared by thoroughly admixing or blending the anionic emulsifying agent and the resin in a suitable mixing vessel equipped with a stirrer until an essentially homogeneous blend is formed. Blending is carried out at an elevated temperature up to about 140°C, preferably from about 95°C to about 125°C. The anionic emulsifying agents useful in the practice of this invention are commercially available. Most of these emulsifying agents contain certain amounts of water. Generally those emulsifying agents available as an aqueous dispersion are from about 25% to about 75% active, the remainder being primarily water.

Resins used as component (1) can be (a) an ester of rosin, and (b) low molecular weight polymers and copolymers of hydrocarbon monomers, provided the resin used has the following properties: a melt viscosity of greater than 100,000 centipoise at 60°C and a R&B softening point greater than 60°C.

Typical examples of esters of rosin include the glycerol ester of rosin; the glycerol ester of (50-65%) hydrogenated rosin; the pentaerythritol ester of rosin; and the pentaerythritol ester of (50-65%) hydrogenated rosin.

Suitable low molecular weight polymers and copolymers of hydrocarbon monomers include styrene; alpha-methylstyrene; mixtures of ortho-, meta- and para-methylstyrene, wherein the para-isomer is at least 85% of the mixture, the meta-isomer is less than 15% and the ortho-isomer is present in trace amounts; indene; butene-1; isobutylene; butadiene; isoprene; pentene-1; and monomer mixtures formed by cracking petroleum hydrocarbon mixtures, and polyterpene resins.

A blend of two or more resins can be used as component (1), if desired, provided the blend has the properties set forth above for said component (1). Typical resins used in preparing a blend include those resins set forth above, as well as rosin; other esters of rosin; modified rosin; and esters of modified rosin.

Suitable rosin esters which can be used to prepare a blend of two or more resins include the rosin esters above set forth, and, in addition, the glycerol ester of hydrogenated (partially or substantially completely) rosin, the glycerol ester of rosin, the pentaerythritol ester of hydrogenated (partially or substantially completely) rosin, and pentaerythritol ester of refined rosin. Modified rosins which can be used to prepare a resin blend for use in this invention include hydrogenated (partially or substantially completely) rosin and disproportionated rosin.

Suitable polymers and copolymers of hydrocarbon monomers for preparing a blend of two or more resins for use as the resin in the compositions of this invention include hydrocarbon resins prepared by polymerizing monomer mixtures formed by cracking petroleum hydrocarbon mixtures; alpha-methylstyrene--para-methylstyrene copolymers; vinyl-toluene copolymer resins; alpha-methylstyene--styrene copolymers; low molecular weight styrene and modified styrene resins; and polyterpene resins derived from alpha-pinene, beta-pinene, and monocyclic terpenes such as dipentene. Typical hydrocarbon resins include those prepared by polymerizing the component mixture of a blend of a five carbon stream and a nine carbon stream from petroleum refining, commonly referred to as a $C_5$-$C_9$ stream. Hence, the resins prepared from such a stream are commonly referred to as $C_5$-$C_9$ resins. The primary components of a $C_5$-$C_9$ stream are unsaturated aliphatic and vinyl aromatic hydrocarbon compounds in which the number of carbons generally does not exceed nine. Other suitable hydrocarbon resins include hydrocarbon resins prepared by polymerizing the monomer mixture of a five carbon component stream, known as a $C_5$ stream, from petroleum refining, the monomers being primarily unsaturated aliphatic. The resins prepared from a $C_5$ stream are commonly referred to as $C_5$ resins. The primary monomers present in a $C_5$ stream are di- and mono-olefins, both normal and branched, having five carbons and mono-olefins having six carbons. $C_5$ resins and $C_9$ resins are described in more detail in

Kirk-Othmer, Encyclopedia of Chemical Technology, Vol. 12, 852-69 (3d Ed. 1980).

Rosin used to prepare esters of rosin and modified rosins that can be used in this invention can be wood rosin, gum rosin, tall oil rosin, and mixtures thereof in their crude or refined state.

The pentaerythritol and glycerol ester of (65%) hydrogenated rosin; the glycerol ester of (50%) hydrogenated rosin; the pentaerythritol ester of rosin; $C_5$ resin; vinyl toluene copolymer resins; copolymers of alpha-methylstyrene and styrene and mixtures thereof and the corresponding fully hydrogenated resins are preferred for use as resin component (1). Mixtures of any two or more can be used if desired.

Representative resins having melt viscosities greater than 100,000 centipoise at 60°C and a R&B softening point greater than 60°C are shown in Table I.

TABLE I

| Resins | R&B Softening Point |
|---|---|
| $C_5$ Resin | 100°C |
| Glycerol ester of (50%) hydrogenated rosin | 78°C |
| Glycerol ester of (65%) hydrogenated rosin | 80°C |
| Pentaerythritol ester of (65%) hydrogenated rosin | 98°C |

Any water-soluble anionic emulsifying agent or mixtures thereof can be used to prepare the compositions of this invention. Typical anionic emulsifying agents include water-soluble soaps of rosin and modified rosin; soaps of oleic acid; sodium dodecyl sulfate; sodium dodecylbenzene sulfonate; and water-soluble compounds represented by the formulas

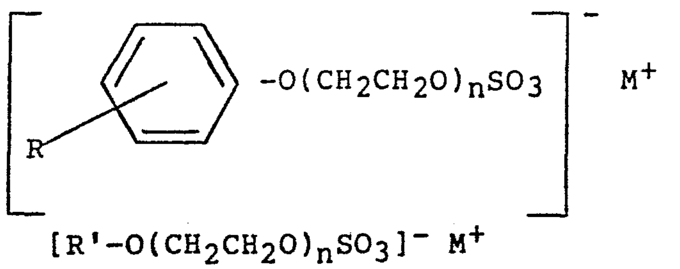
(I)

$[R'-O(CH_2CH_2O)_nSO_3]^- M^+$ (II)

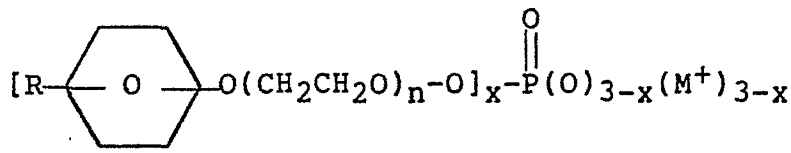
(III), and

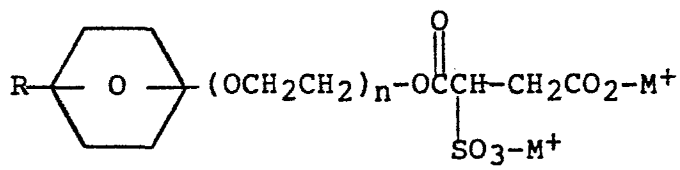
(IV)

In formulas (I), (III) and (IV), R is a normal or branched chain alkyl containing from 4 through 18 carbon atoms. Examples of alkyl are butyl, isobutyl, pentyl, neopentyl, hexyl, isohexyl, octyl, nonyl, dodecyl, tetradecyl, hexadecyl and octadecyl.

In formula (II), R' is a normal or branched chain alkyl or alkenyl or fused ring cycloalkyl containing from 10 through 20 carbon atoms, examples of which are decyl, dodecyl (lauryl), tetradecyl, hexadecyl, oleyl, octadecyl, eicosyl, and abietyl or dihydroabietyl. In formulas (I) - (IV), n is from about 4 to about 30, and $M^+$ is a cation, as hereinafter defined. In formulas (III) and (IV), n is preferably from about 4 to about 10, and in formulas (I) and (II), n is preferably from about 4 to about 9. Most preferably n is from about 4 to about 5 in formulas (I) and (II) and from about 9 to about 10 in formulas (III) and (IV). The value of n is an average value since, as is well known in the art, ethylene oxide condensates varying in chain length are obtained in the condensation reaction.

In formula (III), x is 1 or 2.

In formulas (I) - (IV), $M^+$ is any suitable monovalent cation, other than the hydrogen ion, that will allow substantial dissolution of the emulsifying agent in water.

Preferably, in formulas (I) - (IV), $M^+$ is an alkali metal ion such as potassium, sodium, cesium and rubidium; ammonium ion ($NH_4$); mono(hydroxyethyl)ammonium; di(hydroxyethyl)ammonium; monomethylammonium; dimethylammonium; tri(hydroxyethyl)ammonium; morpholinium; mono (hydroxyisopropyl)ammonium; di(hydroxyisopropyl)ammonium; tri(hydroxyisopropyl)ammonium; 2-(2-hydroxyethoxy)ethyl ammonium; or N-(ethyl)-ammonium, or mixtures thereof.

Preferably, $M^+$ is the potassium, sodium, cesium or ammonium ion. Most preferably, $M^+$ is potassium or sodium ion.

Materials having the structures (I) - (IV) can be made by methods well known in the art. Such materials are available commercially from a number of manufacturers.

The rosin used to prepare the soaps of rosin and modified rosin can be wood rosin, gum rosin, tall oil rosin and mixtures thereof in their crude or refined stated.

Suitable modified rosins for use in preparing the soaps include hydrogenated (partially or substantially completely) rosin and disproportionated rosin.

The soaps of rosin may be prepared by methods well known in the art (see e.g., U.S. Patent 2,138,183 to Littmann).

Suitable alkaline materials for preparing the water-soluble rosin or modified rosin soaps include the usual inorganic and organic basic materials employed to form a rosin salt. Examples of such alkalies include lithium hydroxide, sodium hydroxide, potassium hydroxide, lithium carbonate, sodium carbonate, potassium carbonate, ammonia, and water-soluble amines such as morpholine, ethylamine, n-propylamine, n-butylamine, and dimethylethanolamine.

Mixtures of two or more of the emulsifying agents can be used if desired. The preferred emulsifying agents are potassium resinate and the materials of formula I wherein $M^+$ is sodium.

The following examples are illustrative of the various aspects of this invention.

All parts and percentages used in this specification are by weight unless otherwise specified.

Example 1

This example illustrates a specific embodiment of the composition of this invention, and how to prepare it.

A $C_5$ resin of Table I (613 g.) and a partially (65%) hydrogenated wood rosin (31.5 g.) are added to a vessel fitted with a means for stirring. The contents are capable of withstanding 50-100 psig pressure. Agitation is started and maintained. The contents of the vessel are heated to about 130°C. A solution of potassium hydroxide (4.6 g.) in water (50 g.) is then added to the vessel over a period of about 15 minutes to react with the hydrogenated wood rosin to form potassium resinate which is the anionic emulsifying agent. Stirring is continued until a homogeneous blend is formed (generally about 30 minutes). The mixture is discharged from the vessel while hot and cooled immediately to form a hard mass. The resultant solid mixture has a water content of 7.3%, a resin content of 89.2%, and an emulsifying agent content of 3.5%.

Example 2

This example illustrates another specific embodiment of this invention.

A pentaerythritol ester of (65%) hydrogenated rosin of Table I (613 g.) is added to a vessel fitted with a means for stirring. The contents are capable of withstanding 50-100 psig pressure. Agitation is started and maintained. The contents of the vessel are heated to about 130°C. A solution of the sodium salt of the sulfate monoester of an ethylene oxide adduct of nonylphenol (105.7 g.) containing 71% of water is then added to the vessel over a period of 15 minutes. Stirring is continued until a homogeneous blend is formed (generally about 30 minutes). The mixture is discharged from the vessel while hot and cooled immediately to form a hard mass. The resultant solid mixture has a water content of 10.4%, a resin content of 85.4%, and an emulsifying agent content of 4.2%.

Example 3

This example illustrates another specific embodiment of this invention.

A homogeneous blend is prepared in accordance with the procedure of Example 2 with the exceptions that the glycerol ester of partially (50%) hydrogenated rosin of Table I (613 g.) is used in place of the pentaerythritol ester of (65%) hydrogenated rosin and the contents of the vessel are heated to about 100°C. The resultant solid mixture has a water content of 10.4%, a resin content of 85.4%, and an emulsifying agent content of 4.2%.

Example 4

This example illustrates another specific embodiment of this invention.

A homogeneous blend is prepared in accordance with the procedure of Example 2 and the formulation of Example 3 except that a 1:1 blend of the glycerol ester of partially (50%) hydrogenated rosin and the pentaerythritol ester of partially (50%) hydrogenated rosin (306.5 g. of each) is used in place of the glycerol ester of partially (50%) hydrogenated rosin. The resultant solid mixture has a water content of 10.4%, a resin content of 85.4%, and an emulsifying agent content of 4.2%.

Example 5

This example illustrates another specific embodiment for this invention.

A homogeneous blend is prepared in accordance with the procedure and the formulation of Example 2 except that the disodium salt of ethoxylated (n = approximately 9.5) nonylphenol half ester of sulfosuccinic acid is used instead of the sodium salt of the sulfate monoester of an ethylene oxide adduct of nonylphenol. The resultant solid mixture has a water content of 10.4%, a resin content of 85.4%, and an emulsifying agent content of 4.2%.

Example 6

This example illustrates another specific embodiment for this invention.

A homogeneous blend is prepared in accordance with the procedure and the formulation of Example 2 except that the sodium salt of the complex phosphate ester of the ethylene oxide (n = approximately 9.5) adduct of nonylphenol is used instead of the sodium salt of the sulfate monoester of an ethylene oxide adduct of nonylphenol. The resultant solid mixture has a water content of 10.4%, a resin content of 85.4%, and an emulsifying agent content of 4.2%.

The emulsifiable resin compositions of the instant invention are solids at room temperature (about 23°C.), are storage stable, can be easily and readily handled, do not tend to freeze in storage during cold weather, and contain from 20 to 60 moles of water per mole of anionic emulsifying agent.

The resin compositions of this invention can be used in combination with a latex to form a water-borne adhesive. Typically from about 30% to about 70% of the emulsifiable resin composition, by dry weight of the latex, is incorporated into the latex. Since the compositions of this invention are readily dispersible in water with heat and moderate agitation, it is possible to form an aqueous dispersion thereof either by adding the resin composition to water, or by adding water to the resin composition, to form an aqueous dispersion of from about 40% to about 65% solids, preferably from about 45% to about 60% solids. The preferred method of forming an aqueous dispersion of the resin composition of this invention is to add the water to the resin composition. The aqueous dispersion thus prepared can then be blended with a latex to form a resinous latex adhesive. If desired, the resin composition can be added directly to the latex followed by addition of water to the latex adhesive composition if necessary.

Suitable latices include those containing natural rubber and synthetic rubbers or elastomers. Typical synthetic

rubbers include styrene-butadiene rubbers (SBR), carboxylated styrene-butadiene rubbers, polyisoprene, acrylonitrile-butadiene rubbers (NBR), polychloroprene (neoprene), polyurethane rubbers (isocyanate), acrylonitrile-butadiene-styrene rubbers (ABS), and acrylic rubbers. Alternatively, the latex can be derived from the various vinyl latices such as, ethylene vinyl-acetates, ethylene ethylacrylate copolymers, and the like. Latices of natural, styrene-butadiene, carboxylated styrene-butadiene, and acrylic rubbers are preferred.

The resinous latex adhesives are useful as pressure sensitive adhesives, contact adhesives, laminating adhesives, and the like. Typically the solids contents in a pressure sensitive adhesive ranges from about 40% to about 65% solids.

The expression "consisting essentially of" as used in this specification excludes any unrecited substance at a concentration sufficient to substantially adversely affect the essential properties and characteristics of the composition of matter being defined, while permitting the presence of one or more unrecited substances at concentrations insufficient to substantially adversely affect said essential properties and characteristics.

It is to be understood that the above description, including examples, is illustrative of the invention and not in limitation thereof.

1. A solid resin composition containing a resin and at least one anionic emulsifying agent characterized in that it contains from 20 to 60 moles of water per mole of anionic emulsifying agent.

2. The composition of claim 1 which is further characterized in that it contains, by weight:

(a) from about 82% to about 95% of at least one resin having a melt viscosity of greater than 100,000 centipoise at 60°C and a R&B softening point greater than 60°C; and

(b) from about 3% to about 5% of at least one anionic emulsifying agent selected from the group consisting of water-soluble soaps of rosin and modified rosin; soaps of oleic acid; sodium dodecyl sulfate; sodium dodecylbenzene sulfonate; and water-soluble compounds of the formulas

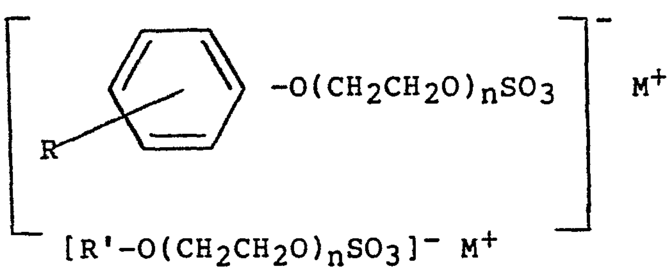 (I)

$[R'-O(CH_2CH_2O)_nSO_3]^- M^+$ (II)

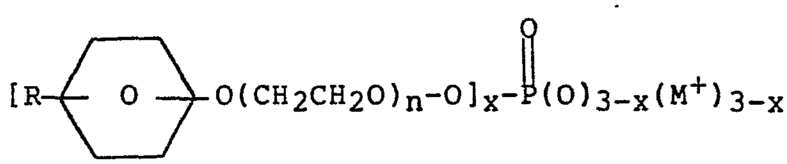 (III), and

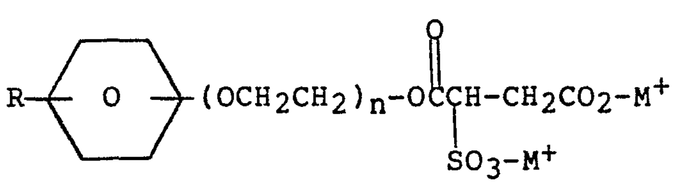 (IV)

wherein in formulas (I), (III) and (IV), R is a normal or branched chain alkyl containing from 4 through 18 carbon atoms; wherein in formula (II), R' is a normal or

branched chain alkyl or alkenyl or fused ring cycloalkyl containing from 10 through 20 carbon atoms; wherein in formulas (I) - (IV), n is from about 4 to about 30; wherein in formula (III), x is 1 or 2, and wherein in formulas (I) - (IV), $M^+$ is a monovalent cation, other than the hydrogen ion, that will allow substantial dissolution of the emulsifying agent in water.

3. The composition of claim 1 or 2 wherein the water is present in an amount from 20 to 40 moles per mole component (b).

4. The composition of claim 2 wherein component (b) is potassium resinate.

5. The composition of claim 2 wherein component (b) is a water-soluble compound of formula I.

6. The composition of claim 2 wherein component (b) is a water-soluble compound of formula II.

7. The composition of claim 2 wherein component (b) is a water-soluble compound of formula III.

8. The composition of claim 2 wherein component (b) is a water-soluble compound of formula IV.

9. The composition of claim 2 wherein component (a) is present in amount from about 92% to about 85%.

10. The composition of claim 2 wherein component (a) has a R&B softening point from about 80°C to about 120°C.

CLAIMS FOR AUSTRIA

1. A process for preparing a solid resin composition which comprises forming an admixture of a resin, at least one anionic emulsifying agent and from 20 to 60 moles of water per mole of anionic emulsifying agent.

2. The process of claim 1 which comprises using, by weight;

(a) from about 82% to about 95% of at least one resin having a melt viscosity of greater than 100,000 centipoise at 60°C and a R&B softening point greater than 60°C; and

(b) from about 3% to about 5% of at least one anionic emulsifying agent selected from the group consisting of water-soluble soaps of rosin and modified rosin; soaps of oleic acid; sodium dodecyl sulfate; sodium dodecylbenzene sulfonate; and water-soluble compounds of the formulas

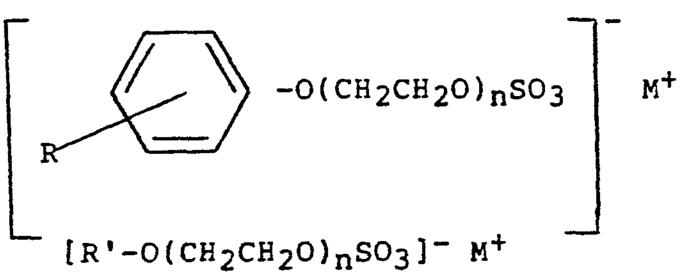

(I)

$[R'-O(CH_2CH_2O)_nSO_3]^- M^+$ (II)

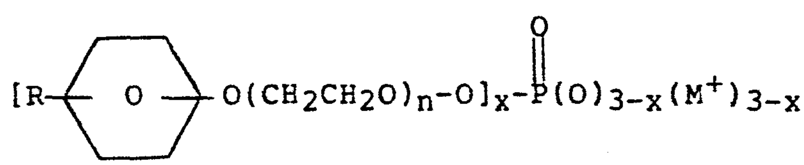

(III), and

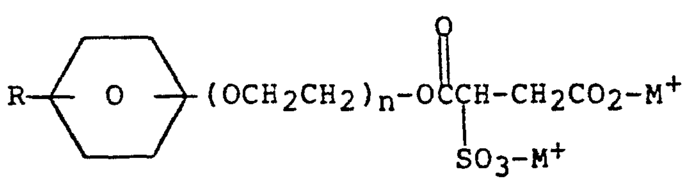

(IV)

wherein in formulas (I), (III) and (IV), R is a normal or branched chain alkyl containing from 4 through 18 carbon atoms; wherein in formula (II), R' is a normal or

branched chain alkyl or alkenyl or fused ring cycloalkyl containing from 10 through 20 carbon atoms; wherein in formulas (I) - (IV), n is from about 4 to about 30; wherein in formula (III), x is 1 or 2, and wherein in formulas (I) - (IV), $M^+$ is a monovalent cation, other than the hydrogen ion, that will allow substantial dissolution of the emulsifying agent in water.

3. The process of claim 1 or 2 wherein the water is present in an amount from 20 to 40 moles per mole component (b).

4. The process of claim 2 wherein component (b) is potassium resinate.

5. The process of claim 2 wherein component (b) is a water-soluble compound of formula I.

6. The process of claim 2 wherein component (b) is a water-soluble compound of formula II.

7. The process of claim 2 wherein component (b) is a water-soluble compound of formula III.

8. The process of claim 2 wherein component (b) is a water-soluble compound of formula IV.

9. The process of claim 2 wherein component (a) is present in amount from about 92% to about 85%.

10. The process of claim 2 wherein component (a) has a R&B softening point from about 80°C to about 120°C.